# EUROPÄISCHE PATENTSCHRIFT

(11) **EP 2 448 987 B1**
(45) Veröffentlichungstag und Bekanntmachung des Hinweises auf die Patenterteilung: **23.03.2016**
(21) Anmeldenummer: 10729812.7
(22) Anmeldetag: 29.06.2010
(51) Int. Cl.: C08G 18/42, C08G 18/18

(54) **VERFAHREN ZUR HERSTELLUNG EINES POLYURETHAN-POLYMERS MIT SEKUNDÄREN HYDROXYL-ENDGRUPPEN UMFASSENDEN POLYESTERPOLYOLEN**
METHOD FOR THE PRODUCTION OF A POLYURETHANE POLYMER COMPRISING POLYESTER POLYOLS THAT CONTAIN TERMINAL SECONDARY HYDROXYL GROUPS
PROCÉDÉ DE PRÉPARATION D'UN POLYMÈRE DE POLYURÉTHANE COMPORTANT DES POLYESTERPOLYOLS PORTANT DES GROUPES TERMINAUX HYDROXYLE SECONDAIRES

(30) Priorität: 01.07.2009 DE 102009031218
(43) Veröffentlichungstag der Anmeldung: 09.05.2012
(73) Patentinhaber: Covestro Deutschland AG, 51373 Leverkusen (DE)
(72) Erfinder: NEFZGER, Hartmut, 50259 Pulheim (DE); HOFMANN, Jörg, 47800 Krefeld (DE); KLESCZEWSKI, Bert, 51069 Köln (DE); BAUER, Erika, 41363 Jüchen (DE); LORENZ, Klaus, 41539 Dormagen (DE)
(74) Vertreter: Levpat
(86) Internationale Anmeldenummer: PCT/EP2010/003935
(87) Internationale Veröffentlichungsnummer: WO 2011/000546

(56) Entgegenhaltungen:
- EP-A1- 0 086 309
- DE-A1- 19 949 091
- GB-A- 1 108 013
- NL-A- 9 201 868
- US-A- 3 502 601
- US-A- 4 647 595

## Beschreibung

Die Erfindung betrifft ein Verfahren zur Herstellung eines Polyurethan *Weichschaums,* umfassend den Schritt der Reaktion von
A) Polyesterpolyolen mit sekundären Hydroxyl-Endgruppen mit
B) Polyisocyanaten, welche ausgewählt sind aus der Gruppe umfassend Toluylendiisocyanat, Diphenylmethandiisocyanat, polymeres Diphenylmethandiisocyanat, Xylylendiisocyanat, Naphthylendiisocyanat, Hexamethylendiisocyanat, Diisocyanatodicyclohexylmethan und/oder Isophorondiisocyanat. Die Erfindung betrifft weiterhin nach einem solchen Verfahren hergestellte Polyurethan-Polymere.

Für die Herstellung von Polyurethan-Polymeren technisch relevante Polyesterpolyole weisen als Folge der zu ihrem Aufbau verwendeten α,ω-Diole primäre Hydroxyl-Endgruppen auf. Der Einsatz von Diolen mit vollständig oder teilweise sekundären Hydroxyl-Endgruppen wie etwa 1,2-Propylenglykol oder Dipropylenglykol führt zu Polyesterpolyolen, die bezüglich der Endgruppen in etwa so ausgestattet sind wie die sie aufbauenden Diole. Im Fall von 1,2-Propylenglykol wären circa 50% der Hydroxyl-Endgruppen sekundär.

Diole, welche nur sekundäre Hydroxyl-Endgruppen aufweisen wie zum Beispiel 2,3-Butandiol spielen aufgrund der im Markt zur Verfügung stehenden Mengen und des Preises im technischen Maßstab keine Rolle. Erschwerend kommt bei allen sekundäre Hydroxyl-Gruppen aufweisenden Diolen in der Polyestersynthese hinzu, dass die Umsetzungsgeschwindigkeit mit Dicarbonsäuren geringer ist.

Von besonderem Nachteil ist weiterhin, dass die Eigenschaften der aus derartigen Polyestern hergestellten Polyurethane als Folge der zahlreichen kurzen Alkylseitengruppen deutlich schlechter sind als die von solchen Polyurethanen, die aus α,ω-Diolen erhalten werden. Demzufolge sind konventionelle Polyesterpolyole, die mit den erwähnten Diolen mit zumindest teilweise sekundären Hydroxyl-Endgruppen hergestellt werden, sowohl teurer in den Fertigungskosten, zum Teil teurer in den Materialkosten als auch weniger geeignet zur Herstellung von hochwertigen Polyurethanen. Deswegen haben Polyesterpolyole mit sekundären Hydroxyl-Endgruppen im Gegensatz zu Polyetherpolyolen bislang technisch keine relevante Bedeutung.

Es wäre wünschenswert, Polyesterpolyole zur Verfügung zu haben, die in ihrem Inneren α,ω-Diol-Einheiten enthalten und an ihrem Kettenende eine Einheit mit sekundären Hydroxyl-Gruppen. Ein derartiger Aufbau hätte eine verringerte Reaktivität gegenüber Polyisocyanaten zur Folge und ermöglicht es beispielsweise im Bereich der Polyurethan-Weichschäume, neben den Aminkatalysatoren, die hauptsächlich die Wasser-Reaktion treiben, auch zusätzliche Urethanisierungskatalysatoren wie Zinnsalze einzusetzen. Insbesondere eröffnet sich dadurch die im Bereich der Polyether-Polyurethanschäume breit genutzte Möglichkeit, diese beiden Reaktionen besser aufeinander abzustimmen und dadurch zum Beispiel Verarbeitungsvorteile bei der Herstellung von Polyester-Polyurethan-Weichschäumen zu erhalten.

Die Funktionalisierung von Carboxylgruppen bei der Polyester-Polyolsynthese wird in DE 36 13 875 A1 offenbart. Zur Herstellung von Polyester-Polyolen mit einer Säurezahl von kleiner als 1, einer Hydroxylzahl von ungefähr 20 bis ungefähr 400 und einer Funktionalität von zweckmäßigerweise 2 bis 3 werden Polycarbonsäuren und/oder deren Anhydride und mehrwertige Alkohole kondensiert. Dieses geschieht vorteilhafterweise in Abwesenheit von üblichen Veresterungskatalysatoren bei Temperaturen von 150 °C bis 250 °C und gegebenenfalls unter vermindertem Druck. Es wird bis zu einer Säurezahl von 20 bis 5 polykondensiert und die erhaltenen Polykondensate danach pro Carboxylgruppe mit 1 bis 5 Mol Alkylenoxid, zum Beispiel 1,2-Propylenoxid und/oder vorzugsweise Ethylenoxid, in Gegenwart eines tertiären Amins alkoxyliert. Das tertiäre Amin ist ausgewählt aus der Gruppe N-Methylimidazol, Diazabicyclo-[2,2,2]octan, Diazabicyclo[5,4,0]undec-7-en und Pentamethyl-diethylen-triamin. Der Katalysator wird zweckmäßigerweise in einer Menge von 0,001 bis 1,0 Gewichts-%, bezogen auf das Polykondensatgewicht, eingesetzt. Vorteilhafterweise wird bei Temperaturen von 100 °C bis 170 °C und unter einem Druck von 1 bis 10 bar alkoxyliert.

Im Verfahren gemäß DE 36 13 875 A1 wird das Veresterungsgemisch bis zu einer Säurezahl von 20 bis 5 polykondensiert. Es wird als wesentlich angegeben, dass die Schmelzkondensation nicht zu früh abgebrochen wird. Werde beispielsweise bei einer Säurezahl von 25 oder größer alkoxyliert, so sei der Wassergehalt des Veresterungsgemischs über Gebühr hoch. Dieses würde jedoch unerwünschte Nebenreaktionen zur Folge haben. Wenn die Synthese der Polyester bei einer Säurezahl von 20 bis 5 abgebrochen wird, bedeutet dieses, dass bereits ein vergleichsweise hoher Anteil an terminalen, aus der Alkoholkomponente stammenden und daher in der Regel primären Hydroxyl-Gruppen vorliegt. Die verbliebenen Carboxyl-Gruppen werden zur Verkürzung der Synthesezeit dann mit Epoxiden umgesetzt, wobei terminale, aus den Epoxiden stammende Hydroxyl-Gruppen erhalten werden.

EP 0 010 805 A1 offenbart eine Pulverbeschichtung auf der Basis von Carboxylgruppenterminierten Polyestern, einer Epoxyverbindung und einer Cholinverbindung der Formel [Y-CH₂-CH₂-N-(-CH₃)₃]⁺ₙ Xⁿ⁻, in der X OR oder -O-C(O)-R ist und R Wasserstoff oder eine C₁₋₄₀-Gruppe ist und Xⁿ⁻ ein Anion ist. Vorzugsweise ist Y OH oder eine Gruppe -O-C(O)-R. Diese Pulverbeschichtungen sind weniger anfällig für das Vergilben und nicht toxisch. Die Epoxyverbindung weist gemäß dieser Schrift allerdings im Durchschnitt zwei oder mehr Epoxygruppen pro Molekül auf. Die Epoxyverbindung dient hier dazu, um Polyestermoleküle miteinander zu vernetzen und nicht zum Aufbau von OH-terminierten Polyestermolekülen.

DE 28 49 549 A1 offenbart ein Verfahren zur Herstellung von Polyether-Polyester-Polyolen durch Umsetzung eines Polyetherpolyols mit einem Polycarbonsäureanhydrid zu einem Säurehalbester. Anschließend wird der Säure-Halbester mit einem Alkylenoxid zu einem Produkt mit einer Säurezahl von kleiner als 5 mg KOH/g umgesetzt. Die Umsetzung des Alkylenoxids mit dem Säure-Halbester wird in Gegenwart von 50 bis 100 ppm, bezogen auf das Ausgangs-Polyetherpolyol, eines Trialkylamins mit 2 bis 4 Kohlenstoffatomen in der Alkylkette durchgeführt. Das erhaltene Polyol basiert jedoch immer noch auf Polyethern und nicht auf Polyestern.

DE 199 49 091 A1 offenbart Polyester-Polyetherblockcopolymere, hergestellt durch Anlagerung von Alkylenoxiden an H-funktionelle Startersubstanzen, wobei als H-funktionelle Startersubstanzen Polyesteralkohole und als Katalysatoren Multimetallcyanidverbindungen eingesetzt werden. Es entstehen Polyester-Polyetherblockcopolymere. Die Herstellung von Polyesterpolyolen mit sekundären Hydroxylendgruppen wird nicht offenbart.

Es besteht folglich weiterhin der Bedarf an alternativen Herstellungsverfahren für Polyurethan-Polymere. Insbesondere besteht ein Bedarf an solchen Verfahren unter Verwendung von gemäß alternativen Wegen hergestellten Polyesterpolyolen mit sekundären Hydroxyl-Endgruppen.

Gegenstand der Erfindung ist ein Verfahren zur Herstellung eines Polyurethan *Weichschaums,* umfassend den Schritt der Reaktion von
A) Polyesterpolyolen mit sekundären Hydroxyl-Endgruppen, welche erhältlich sind aus der Reaktion eines Carboxyl-Endgruppen umfassenden Polyesters mit einem Epoxid der allgemeinen Formel (1): 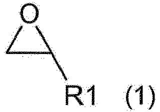 wobei R1 für einen Alkylrest oder einen Arylrest steht und wobei der Carboxyl-Endgruppen umfassende Polyester eine Säurezahl von ≥ 25 mg KOH/g bis ≤ 400 mg KOH/g und eine Hydroxylzahl von ≤ 5 mg KOH/g aufweist
   mit
B1) Polyisocyanaten, welche ausgewählt sind aus der Gruppe umfassend Toluylendiisocyanat (TDI), Diphenylmethandiisocyanat (MDI), polymeres Diphenylmethandiisocyanat (PMDI), Xylylendiisocyanat (XDI), Naphthylendiisocyanat (NDI), Hexamethylendiisocyanat (HDI), Diisocyanatodicyclohexylmethan (H₁₂-MDI) und/oder Isophorondiisocyanat (IPDI);
B2) Prepolymeren der in B1) genannten Polyisocyanate;
B3) Allophanaten, Harnstoffen, Biureten, Isocyanuraten, Uretdionen und/oder Carbodiimiden der in B1) genannten Polyisocyanate; und/oder
B4) Carbodiimid/Uretonimin-Derivaten der in B1) genannten Polyisocyanate.

Das erfindungsgemäße Verfahren hat den Vorteil, dass wegen der geringeren Reaktionsgeschwindigkeit der sekundären Hydroxyl-Endgruppen bei den eingesetzten Polyesterpolyolen in der Herstellung von Polyurethan-Weichschäumen eine größere Bandbreite an Katalysatorsystemen einsetzbar ist. Insbesondere können teilweise Zinnkatalysatoren als Ersatz für Aminkatalysatoren verwendet werden. Ein geringerer Anteil an Aminkatalysatoren wirkt sich günstig auf Eigenschaften wie Geruch und Alterungsbeständigkeit der Polyurethane aus. Speziell konnte gezeigt werden, dass auch mit einem kommerziell günstigem Isomerengemisch von 2,4-TDI : 2,6-TDI 80 : 20 (T80) ein brauchbarer Polyurethanweichschaum erhalten wird.

Ausdrücklich mit eingeschlossen im erfindungsgemäßen Verfahren ist die Herstellung von Polyurethan-Prepolymeren durch Reaktion von Polyolen A) mit den Polyisocyanaten B1), B2), B3) und/oder B4).

Die Säurezahl der Carboxyl-Endgruppen umfassenden Polyester lässt sich anhand der Norm DIN 53402 bestimmen und kann auch ≥ 30 mg KOH/g bis ≤ 300 mg KOH/g oder ≥ 50 mg KOH/g bis ≤ 250 mg KOH/g betragen. Die Hydroxylzahl der Carboxyl-Endgruppen umfassenden Polyester lässt sich anhand der Norm DIN 53240 bestimmen und kann auch ≤ 3 mg KOH/g oder ≤ 1 mg KOH/g betragen.

Vorteilhafterweise ist die Alkoholkomponente, aus der der Carboxyl-Endgruppen umfassende Polyester aufgebaut wird, ein α,ω-Polyol, insbesondere ein α,ω-Diol oder zu mindestens 90 Mol-% ein α,ω-Diol.

Zur Umsetzung mit dem Epoxid (1) eignen sich grundsätzlich alle Carboxyl-Endgruppen umfassenden Polyester, sofern sie den Bedingungen der erfindungsgemäßen Säure- und Hydroxylzahlen genügen. Diese Polyester werden auch synonym als Polyestercarboxylate bezeichnet. Polyestercarboxylate können durch Polykondensation aus niedermolekularen Polyolen und niedermolekularen Polycarbonsäuren, einschließlich deren Anhydriden, und deren Alkylestern hergestellt werden. Weiterhin können Hydroxycarbonsäuren einschließlich deren innerer Anhydride (Lactone) verwendet oder mitverwendet werden.

Die erfindungsgemäß einsetzbaren Polyestercarboxylate haben überwiegend Carboxyl-Endgruppen. So können die Endgruppen beispielsweise in einem Anteil von ≥ 90 mol-%, von ≥ 95 mol-% oder von ≥ 98 mol-% Carboxylgruppen sein. Demgegenüber weisen sie nur in einem sehr untergeordnetem Maße Hydroxyl-Endgruppen auf, wie sich aus der erfindungsgemäßen Vorgabe der Hydroxylzahlen ergibt. Unabhängig zum vorher Ausgeführten kann beispielsweise die Anzahl der Carboxyl-Endgruppen die Anzahl der Hydroxyl-Endgruppen um das ≥ 5-fache oder sogar das ≥ 10-fache übersteigen. Geeignete Polyestercarboxylate können Molekulargewichte im Bereich von ≥ 400 Da bis ≤ 10000 Da, bevorzugt von ≥ 450 bis ≤ 6000 Da, aufweisen. Ebenfalls unabhängig vom vorher Ausgeführten kann die Anzahl der Carboxyl-Endgruppen im Polyestercarboxylat 2, 3, 4, 5 oder 6 betragen. Die durchschnittliche Funktionalität der Polyestercarboxylate kann beispielsweise ≥ 2 bis ≤ 3 sein.

Zur Herstellung der Polyestercarboxylate einsetzbare niedermolekulare Polyole sind insbesondere solche mit Hydroxylfunktionalitäten von ≥ 2 bis ≤ 8. Sie haben zum Beispiel ≥ 2 bis ≤ 36, bevorzugt ≥ 2 bis ≤ 12 C-Atome. Allgemein ist es vorteilhaft, wenn die Polyole α,ω-Polyole, insbesondere α,ω-Diole oder zu mindestens 90 Mol-% α,ω-Diole sind. Ganz besonders bevorzugt sind Polyole aus der Gruppe umfassend Ethylenglykol und Diethylenglykol und deren höhere Homologe, weiterhin 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol und deren höhere Homologe, weiterhin 2-Methylpropandiol-1,3, Neopentylglykol, 3-Methylpentandiol-1,5, weiterhin Glycerin, Pentaerythrit, 1,1,1-Trimethylolpropan und/oder Kohlenhydrate mit 5 bis 12 C-Atomen, wie Isosorbid.

Ebenfalls einsetzbar sind weiterhin 1,2-Propandiol, Dipropylenglykol und dessen höhere Homologe.

Selbstverständlich können auch Gemische von Polyolen eingesetzt werden, wobei die genannten Polyole mindestens 90 Mol-% aller Hydroxylgruppen beisteuern.

Zur Herstellung der Polyestercarboxylate einsetzbare niedermolekulare Polycarbonsäuren oder deren Säureäquivalente wie zum Beispiel Anhydride haben insbesondere 2 bis 36, bevorzugt 2 bis 12 C-Atome. Die niedermolekularen Polycarbonsäuren können aliphatisch oder aromatisch sein. Sie können ausgewählt werden aus der Gruppe umfassend Bernsteinsäure, Fumarsäure, Maleinsäure, Maleinsäureanhydrid, Glutarsäure, Adipinsäure, Sebacinsäure, Korksäure, Azelainsäure, 1,10-Decandicarbonsäure, 1,12-Dodecandicarbonsäure, Phthalsäure, Phthalsäureanhydrid, Isophthalsäure, Terephthalsäure, Pyromellitsäure und/oder Trimellitsäure.

Selbstverständlich können auch Gemische niedermolekularer Polycarbonsäuren eingesetzt werden, wobei die genannten Polycarbonsäuren mindestens 90 Mol-% aller Carboxylgruppen beisteuern.

Werden Hydroxycarbonsäuren einschließlich deren innerer Anhydride (Lactone) verwendet oder mitverwendet, dann entstammen diese bevorzugt aus der Gruppe Caprolacton beziehungsweise 6-Hydroxycapronsäure.

Die Polykondensation erfolgt bevorzugt ohne Katalysator, kann aber auch durch die dem Fachmann bekannten Katalysatoren katalysiert werden. Die Polykondensation kann nach geläufigen Methoden, zum Beispiel bei erhöhter Temperatur, im Vakuum, als Azeotropveresterung und nach dem Stickstoffblasverfahren durchgeführt werden. Zur Erreichung der erfindungsgemäß vorgesehenen Säurezahlen und Hydroxylzahlen wird die Polykondensation nicht auf einer bestimmten Stufe abgebrochen, sondern unter Entfernen des gebildeten Wassers bis zu einem möglichst vollständigen Umsatz der OH-Gruppen des Alkohols unter Bildung von Carboxyl-Endgruppen durchgeführt.

Das Epoxid der allgemeinen Formel (1) ist ein terminales Epoxid mit einem Substituenten R1, welcher ein Alkylrest oder ein Arylrest sein kann. Der Begriff "Alkyl" umfasst allgemein im Zusammenhang der gesamten Erfindung Substituenten aus der Gruppe n-Alkyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten und/oder mehrkernige Carbo- oder Heteroarylsubstituenten. Das molare Verhältnis von Epoxid zu Carboxyl-Endgruppe im erfindungsgemäßen Verfahren kann beispielsweise in einem Bereich von ≥ 0,9:1 bis ≤ 10:1, bevorzugt von ≥ 0,95:1 bis ≤ 5:1 und mehr bevorzugt von ≥ 0,98:1 bis ≤ 3:1 liegen.

Die Reaktion der Polyestercarboxylate mit dem Epoxid erfolgt in Gegenwart eines Katalysators, welcher mindestens ein Stickstoffatom im Molekül umfasst. Die Menge dieses stickstoffhaltigen Katalysators, bezogen auf die Gesamtmasse des Reaktionsansatzes, kann beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen.

Durch die Reaktion der Carboxyl-Gruppen des Polyesters mit dem Epoxid entstehen unter Ringöffnung je nach Ort des Angriffs auf den Epoxidring primäre oder sekundäre Alkohole. Vorzugsweise reagieren ≥ 80%, ≥ 90% oder ≥ 95% der Carboxyl-Gruppen mit dem Epoxid und es wird vorzugsweise ein Anteil an sekundären Hydroxyl-Gruppen von ≥ 50 Mol-% bis ≤ 100 Mol-% oder von ≥ 60 Mol-% bis ≤ 85 Mol-% erhalten.

Die Polyisocyanate der Gruppe B1) sind hinsichtlich der Isomere von einzelnen Mitgliedern der Gruppe zunächst nicht weiter beschränkt. So können beispielsweise 2,4-TDI oder 2,6-TDI sowie im Fall des MDI die 2,2'-, 2,4'- und 4,4'-Isomere eingesetzt werden. Polymeres MDI kann beispielsweise 6, 7, 8, 9 oder 10 MDI-Monomere enthalten.

Die in Gruppe B2) genannten Prepolymere können beispielsweise Reaktionsprodukte der Polyisocyanate B1) mit Polyesterpolyolen A) oder aber beliebigen anderen Polyolen sein.

Die in Gruppe B3) genannten Allophanate, Harnstoffe, Biurete, Isocyanurate, Uretdione und/oder Carbodiimide der Polyisocyanate B1) können Derivate der einzelnen Polyisocyanate oder aber auch beliebige gemischte Derivate der Polyisocyanate untereinander und miteinander sein.

Die in Gruppe B4) genannten Carbodümid/Uretonimin-Derivate der Polyisocyanate B1) werden unter Kohlendioxidabspaltung durch Erhitzen der Isocyanate mit geeigneten Katalysatoren erhalten. Üblicherweise werden Katalysatoren aus der Phospholinoxidreihe eingesetzt. Kommerziell eingesetzt werden beispielsweise Carbodiimide/Uretonimine des 4,4'-MDI (Desmodur CD-S^{®} der Firma Bayer MaterialScience AG).

Die Herstellung der Polyurethan-*Weichschäume* nach dem erfindungsgemäßen Verfahren kann unter Zuhilfenahme der dem Fachmann bekannten Hilfs- und Zusatzstoffe wie beispielsweise Wasser, Treibmittel, Emulgatoren, Schaumstabilisatoren, Füllstoffen, etc. erfolgen. Weiterhin können die üblichen Kennzahlen für das Verhältnis zwischen NCO- und OH-Gruppen wie beispielsweise 95, 100 oder 105 eingestellt werden.

In einer Ausführungsform des erfindungsgemäßen Verfahrens wird in der Herstellung der Polyesterpolyole A) der Carboxyl-Endgruppen umfassende Polyester hergestellt, indem pro Mol Hydroxylgruppen eines Alkohols ≥ 1,03 Mol bis ≤ 1,90 Mol Carboxylgruppen oder Carboxylgruppenäquivalente einer Säurekomponente eingesetzt werden. Durch den Überschuss der Carboxylgruppen oder deren Äquivalente wie Anhydride lässt sich erreichen, dass ein weit überwiegender Teil der Endgruppen oder sogar alle Endgruppen des Polyesters Carboxylgruppen sind. In der nachfolgenden Reaktion mit dem Epoxid können diese dann zu den entsprechenden Alkoholen weiter umgesetzt werden. Der Überschuss an Carboxylgruppen kann auch ≥ 1,04 Mol bis ≤ 1,85 Mol oder ≥ 1,05 Mol bis ≤ 1,5 Mol pro Mol Hydroxylgruppen betragen.

In einer weiteren Ausführungsform des erfindungsgemäßen Verfahrens wird in der Herstellung der Polyesterpolyole A) der Carboxyl-Endgruppen umfassende Polyester unmittelbar vor der Reaktion mit dem Epoxid der allgemeinen Formel (1) hergestellt. Dieses bedeutet, dass direkt im Anschluss an die Herstellung des Polyesters die Umsetzung mit dem Epoxid unter Verwendung eines Katalysators mit mindestens einem Stickstoffatom pro Molekül durchgeführt wird. Vorteilhafterweise wird die Umsetzung durchgeführt, indem das Epoxid dem Reaktionsgemisch aus der Polyestersynthese hinzugefügt wird. Dieses erfolgt vorteilhafterweise in derselben Produktionsanlage. Auf diese Weise wird Produktionszeit eingespart.

In einer weiteren Ausführungsform des erfindungsgemäßen Verfahrens ist in der Herstellung der Polyesterpolyole A) der Carboxyl-Endgruppen umfassende Polyester erhältlich aus der Reaktion von
Ethylenglykol und Diethylenglykol sowie deren höhere Homologe, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und/oder 1,1,1-Trimethylolpropan
   mit
Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und/oder Caprolacton.

In einer weiteren Ausführungsform des erfindungsgemäßen Verfahrens ist in der Herstellung der Polyesterpolyole A) in dem Epoxid der allgemeinen Formel (1) R1 Methyl, Ethyl, n-Propyl, iso-Propyl, n-Butyl, sec-Butyl, iso-Butyl, tert-Butyl, Cyclohexyl oder Phenyl. Bevorzugt ist hierbei, dass R1 Methyl ist. Dann ist das eingesetzte Epoxid Propylenoxid.

In einer weiteren Ausführungsform des erfindungsgemäßen Verfahrens findet in der Herstellung der Polyesterpolyole A) die Reaktion mit dem Epoxid der allgemeinen Formel (1) bei einer Temperatur von ≥ 70 °C bis ≤ 150 °C statt. Die Reaktionstemperatur kann vorzugsweise ≥ 80 °C bis ≤ 130 °C betragen.

In einer weiteren Ausführungsform des erfindungsgemäßen Verfahrens beträgt in den Polyesterpolyolen der molare Anteil an sekundären Hydroxylgruppen ≥ 50 mol-% bis ≤ 100 mol-%. Hierunter ist der molare Anteil in dem Polyesterpolyol insgesamt, also nicht auf ein einzelnes Molekül bezogen, zu verstehen. Er lässt sich zum Beispiel mittels ¹H-NMR-Spektroskopie bestimmen. Der Anteil kann auch ≥ 60 mol-% bis ≤ 99 mol-% betragen. Je größer der Anteil an sekundären Hydroxylgruppen im Polyesterpolyol, desto langsamer ist die Reaktionsgeschwindigkeit bei der Polyurethanherstellung und desto mehr Möglichkeiten ergeben sich in der Variation der Katalysatoren.

In einer weiteren Ausführungsform des erfindungsgemäßen Verfahrens wird in der Herstellung der Polyesterpolyole A) die Reaktion des Carboxyl-Endgruppen umfassenden Polyesters mit dem Epoxid der allgemeinen Formel (1) in Gegenwart eines Katalysators durchgeführt, welcher pro Molekül mindestens ein Stickstoffatom umfasst.

Hinsichtlich des Katalysators in der Herstellung der Polyesterpolyole A) ist es beispielsweise möglich, dass der Katalysator ausgewählt ist aus der Gruppe umfassend:
- Amine der allgemeinen Formel (2): 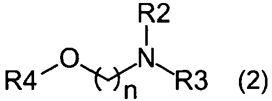 wobei gilt:
   R2 und R3 sind unabhängig voneinander Wasserstoff, Alkyl oder Aryl; oder
   R2 und R3 bilden gemeinsam mit dem sie tragenden N-Atom einen aliphatischen, ungesättigten oder aromatischen Heterozyklus;
   n ist eine ganze Zahl von 1 bis 10, also 1, 2, 3, 4, 5, 6, 7, 8, 9 oder 10;
   R4 ist Wasserstoff, Alkyl oder Aryl; oder
   R4 steht für -(CH₂)ₓ-N(R41)(R42), wobei gilt:
      R41 und R42 sind unabhängig voneinander Wasserstoff, Alkyl oder Aryl; oder
      R41 und R42 bilden gemeinsam mit dem sie tragenden N-Atom einen aliphatischen, ungesättigten oder aromatischen Heterozyklus;
      x ist eine ganze Zahl von 1 bis 10, also 1, 2, 3, 4, 5, 6, 7, 8, 9 oder 10;
- Amine der allgemeinen Formel (3): 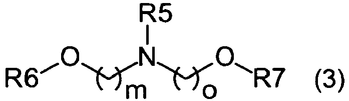 wobei gilt:
   R5 ist Wasserstoff, Alkyl oder Aryl;
   R6 und R7 sind unabhängig voneinander Wasserstoff, Alkyl oder Aryl;
   m und o sind unabhängig voneinander eine ganze Zahl von 1 bis 10, also 1, 2, 3, 4, 5, 6, 7, 8, 9 oder 10;
   und/oder:
- Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

Die genannten Katalysatoren können die Reaktion der Carboxyl-Gruppen mit dem Epoxid in einer Weise beeinflussen, dass ein höherer Anteil an gewünschten sekundären OH-Endgruppen im Polyesterpolyol erhalten wird.

Amine der allgemeinen Formel (2) können im weitesten Sinne als Aminoalkohole oder deren Ether beschrieben werden. Ist R4 Wasserstoff, so sind die Katalysatoren in eine Polyurethanmatrix einbaubar, wenn das Polyesterpolyol mit einem Polyisocyanat umgesetzt wird. Dieses ist vorteilhaft, um das Austreten des Katalysators, der im Falle von Aminen mit nachteiligen Geruchsproblemen einhergehen kann, an die Polyurethanoberfläche, die sogenannte "fogging"- oder VOC (volatile organic compounds)-Problematik, zu verhindern.

Amine der allgemeinen Formel (3) können im weitesten Sinne als Amino(bis)alkohole oder deren Ether beschrieben werden. Sind R6 oder R7 Wasserstoff, so sind diese Katalysatoren ebenfalls in eine Polyurethanmatrix einbaubar.

Hinsichtlich des Katalysators in der Herstellung der Polyesterpolyole A) ist es bevorzugt, dass in dem Amin der allgemeinen Formel (2) R2 und R3 Methyl sind, R4 Wasserstoff ist und n = 2 ist oder aber R2 und R3 Methyl sind, R4 -(CH₂)₂-N(CH₃)₂ ist und n = 2 ist. Insgesamt ergibt sich also entweder N,N-Dimethylethanolamin oder Bis(2-(dimethylamino)ethyl)ether.

Hinsichtlich des Katalysators in der Herstellung der Polyesterpolyole A) ist es weiterhin bevorzugt, dass in dem Amin der allgemeinen Formel (3) R5 Methyl ist, R6 und R7 Wasserstoff sind, m = 2 ist und o = 2 ist. Insgesamt ergibt sich also N-Methyldiethanolamin.

Solche Verbindungen können in bestimmten Varianten auch als sogenannte Treibkatalysatoren verwendet werden, das heißt, sie katalysieren bevorzugt die Reaktion der Isocyanatgruppen mit Wasser unter Bildung von Kohlendioxid, in geringerem Ausmaß auch deren Reaktion mit Hydroxylgruppen unter Bildung von Urethangruppen. Daher kann diese Zusammensetzung unmittelbar weiter in der Herstellung von Polyurethanen eingesetzt werden. Bevorzugt sind N,N-Dimethylethanolamin, Bis(2-(dimethylamino)ethyl)ether oder N-Methyldiethanolamin.

Die Menge der genannten Katalysator-Verbindungen kann relativ zum erfindungsgemäßen Polyol beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen.

In einer weiteren Ausführungsform des erfindungsgemäßen Verfahrens werden in der Herstellung des Polyurethan-Polymers Zinn umfassende Katalysatoren eingesetzt, welche einen Anteil an der insgesamt in der Herstellung des Polyurethan-Polymers verwendeten Katalysatormenge von ≥ 5 Gewichts-% bis ≤ 99 Gewichts-% aufweisen. Beispiele für solche Urethanisierungskatalysatoren sind neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexanoat und Zinn (II)-laurat und die Zinn (IV)-Verbindungen wie Dibutylzinnoxid, Dibutylzinndichlorid, Dibutylzinndiacetat, Dibutylzinndilaurat, Dibutylzinnmaleat oder Dioctylzinndiacetat. Die Angabe der Katalysatormenge in Gewichts-% bezieht sich auf den Katalysator als solchen und nicht auf eine eingesetzte Katalysatorzusammensetzung, beispielsweise einer Lösung des Katalysators in einem Lösungsmittel. Die zu 100 Gewichts-% der Katalysatormenge fehlenden Anteile können beispielsweise in der Herstellung von solchen Polyurethanen verwendeten Aminkatalysatoren ausmachen. Hierbei ist bevorzugt, dass der Gehalt an Aminkatalysatoren möglichst gering ist

Der Anteil kann auch in einem Bereich von ≥ 6 Gewichts-% bis ≤ 80 Gewichts-% oder von ≥ 7 Gewichts-% bis ≤ 50 Gewichts-% liegen. Insbesondere eine Kombination mit Aminkatalysatoren, die hauptsächlich die Wasser-Reaktion treiben, eröffnet auch für Polyester-Polyurethanschäume die im Bereich der Polyether-Polyurethanschäume breit genutzte Möglichkeit, die Urethanisierungs- und die Wasser-Reaktionen besser aufeinander abzustimmen.

In einer weiteren Ausführungsform des erfindungsgemäßen Verfahrens ist das Polyisocyanat B) Toluylendiisocyanat (TDI) mit einem Anteil des 2,4-Isomers von ≥ 75 Gewichts-% bis ≥ 100 Gewichts-%. Vorzugsweise handelt es sich um die kommerziell preisgünstig erhältliche Isomerenmischung unter der technischen Bezeichnung T80, also 2,4- und 2,6-TDI im Verhältnis von 80 Gewichts-% zu 20 Gewichts-%.

Ein weiterer Gegenstand der vorliegenden Erfindung ist ein Polyurethan-*Weichschaum* welcher durch ein erfindungsgemäßes Verfahren erhältlich ist. Vor allem kann es durch ein erfindungsgemäßes Verfahren erhalten sein. Insbesondere der Fall, dass das zur Herstellung verwendete Polyol aus der Reaktion eines Carboxyl-Endgruppen umfassenden Polyesters mit Propylenoxid stammt, lässt sich mittels einer Isocyanatolyse des Polyurethans analysieren. Hierbei kann das charakteristische Signal der aus dem Propylenoxid stammenden Methylgruppe am Kettenende des Polyols, welches nach der Isocyanatolyse in unmittelbarer Nähe zur Urethangruppe steht, im ¹H-NMR-Spektrum erkannt werden (J.T. Mehl, R. Murgasova, X. Dong, D.M. Hercules und H. Nefzger; Analytical Chemistry (2000), 72(11), 2490-2498). Analog können auch Polyester, die durch Ethoxylierung von Carboxyl-Endgruppen erhalten wurden, für die meisten Fälle erkannt werden. Einzige Ausnahme bilden solche Polyester, für deren Aufbau Ethylenglykol verwendet oder mit verwendet wurde.

Polyurethan-Weichschäume in Sinne der vorliegenden Erfindung sind solche Polyurethan-Polymere und insbesondere Schäume, deren Rohdichte gemäß DIN EN ISO 3386-1-98 im Bereich von ≥ 10 kg/m³ bis ≤ 150 kg/m³ liegt und deren Stauchhärte gemäß DIN EN ISO 3386-1-98 im Bereich von ≥ 0,5 kPa bis ≤ 20 kPa (bei 40% Verformung) liegt.

Die vorliegende Erfindung wird anhand der nachfolgenden Beispiele weiter erläutert. Hierbei haben die verwendeten Materialien und Abkürzungen die folgende Bedeutung und Bezugsquellen:
Diethylenglykol (DEG): ex Ineos
1,1,1-Trimethylolpropan (TMP): ex Aldrich
Adipinsäure: ex BASF
N-Methyldiethanolamin (MDEA): ex Aldrich
Desmophen VP-PU 60WB01: Polyesterpolyol mit ausschließlich primären OH-Endgruppen; ex Bayer MaterialScience
Silbyk 9100: Polyethermodifiziertes Polysiloxan; ex Byk
RCA 117: N,N'-Dimethylpiperazin, vertrieben als RC-PUR Aktivator 117/Addocat 117 ex Rheinchemie
Niax A30: ca. 50 Gew.-%-Lösung von Bis(2-(dimethylamino)ethyl)ether in Isononylphenolethoxylat; ex Momentive Performance Materials
Niax A1: 70 Gew.-%-Lösung von Bis(2-(dimethylamino)ethyl)ether in Dipropylenglykol; ex Momentive Performance Materials
Dabco 33 LV: 33 Gew.-%-Lösung von 2,2,2-Diazabicyclooctan in Propylenglykol; ex Aldrich Addocat SO: Zinn-2-Ethylhexanoat; ex Rheinchemie
Desmodur T80: 2,4- und 2,6-Toluylendiisocyanat (TDI) im Verhältnis von 80 : 20; ex Bayer MaterialScience
Desmodur T65: 2,4- und 2,6-Toluylendiisocyanat (TDI) im Verhältnis von 65 : 35; ex Bayer MaterialScience

Die Analysen wurden wie folgt durchgeführt:
Hydroxylzahl: anhand der Norm DIN 53240
Säurezahl: anhand der Norm DIN 53402
Viskosität: Rheometer MCR 51 der Firma Anton Paar
Verhältnis der primären und sekundären OH-Gruppen: mittels ¹H-NMR (Bruker DPX 400, Deuterochloroform)

### 1. Herstellung des Polyestercarboxylates PESC-1:

In einem 4-Liter 4-Halskolben, ausgestattet mit Heizpilz, mechanischem Rührwerk, Innenthermometer, 40 cm-Füllkörper-Kolonne, Kolonnenkopf, absteigendem Intensivkühler, sowie Membranvakuumpumpe wurden 3184 g (30,04 Mol) Diethylenglykol, 349 g (2,06 Mol) 1,1,1-Trimethylolpropan und 5667 g (38,82 Mol) Adipinsäure unter Stickstoffüberschleierung vorgelegt und unter Rühren im Verlauf von 1 Stunde auf 200 °C erhitzt, wobei bei einer Kopftemperatur von 100°C Wasser abdestillierte. Man senkte anschließend im Verlauf von 90 Minuten den Innendruck langsam auf 15 mbar ab und vervollständigte die Reaktion für weitere 24 Stunden. Man kühlte ab und bestimmte folgende Eigenschaften:

### Analyse des Polyestercarboxylats PESC-1:

Hydroxylzahl: 0,3 mg KOH/g
Säurezahl: 70,3 mg KOH/g
Viskosität: 1620 mPas (75 °C)

### 2. Herstellung des Polyestercarboxylates PESC-2

In einem 1000 Liter Rührwerksbehälter, ausgestattet mit Innenthermometer, 250 cm-Füllkörper-Kolonne, Destillationsbrücke, absteigendem Intensivkühler, sowie mit einer Wasserringpumpe wurden 242,6 kg (2287 Mol) Diethylenglykol, 26,5 kg (197,8 Mol) 1,1,1-Trimethylolpropan und 431,8 kg (2957 Mol) Adipinsäure unter Stickstoffüberschleierung vorgelegt und unter Rühren im Verlauf von 5 Stunden auf 200 °C erhitzt, wobei bei einer Kopftemperatur von 100 °C Wasser abdestillierte. Man senkte anschließend im Verlauf von 3 Stunden den Innendruck langsam auf 15 mbar ab und vervollständigte die Reaktion für weitere 24 Stunden. Man kühlte ab und bestimmte folgende Eigenschaften:

### Analyse des Polyesters:

Hydroxylzahl: 0,4 mg KOH/g
Säurezahl: 67,0 mg KOH/g
Viskosität: 1750 mPas (75 °C)

### 3. Herstellung des Polyesterpolyols PESP-1:

In einem 500 ml Glasdruckreaktor wurden 174,05 g des Polyestercarboxylates PESC-1 aus Beispiel 1 sowie 0,20 g (1000 ppm bezüglich des Gesamtansatzes) an MDEA unter Schutzgas (Stickstoff) vorgelegt und dann auf 125 °C aufgeheizt. Anschließend wurden 25,95 g Propylenoxid während 195 Minuten zudosiert, wobei der Reaktordruck auf 4,2 bar (absolut) gehalten wurde. Nach einer Nachreaktionszeit von 60 Minuten unter Rühren bei 125 °C wurden leichtflüchtige Anteile bei 90 °C (1 mbar) abdestilliert und das Reaktionsgemisch anschließend auf Raumtemperatur abgekühlt. Man bestimmte folgende Eigenschaften:

### Analyse des Polyesterpolyols PESP-1:

Hydroxylzahl: 65,8 mg KOH/g
Säurezahl: 0,04 mg KOH/g
Viskosität: 15790 mPas (25 °C)
OH-Gruppen 1°/2° [mol/mol]: 32/68

Bei dem eingesetzten Polyestercarboxylat PESC-1 aus Beispiel 1 liegen praktisch vollständig Carboxyl-Endgruppen und keine Hydroxyl-Endgruppen vor. Dieses lässt sich anhand der Hydroxylzahlen nach der Reaktion zum Polyester ablesen, welche unterhalb von 1 mg KOH/g liegen. Die Umsetzung der Polyestercarboxylate mit dem Epoxid läuft ebenfalls praktisch quantitativ an allen Carboxylgruppen des Polyestercarboxylats ab. Man erkennt den Umsatz an der niedrigen Säurezahl und an der Hydroxylzahl, welche der ursprünglichen Säurezahl des Polyestercarboxylates PESC-1 gut entspricht. Pro Carboxylgruppe wurde also eine OH-Gruppe gebildet. Der Katalysator MDEA ermöglicht es, gewünschte sekundäre OH-Endgruppen in einem Anteil von 68 % zu erhalten.

### 4. Herstellung des Polyesterpolyols PESP-2:

In einem 20 1 Stahldruckreaktor wurden 12845 g des Polyestercarboxylates PESC-2 aus Beispiel 2 sowie 12,6 g (863 ppm bezüglich des Gesamtansatzes) an MDEA unter Schutzgas (Stickstoff) vorgelegt und dann auf 125 °C aufgeheizt. Anschließend wurden 1741 g Propylenoxid während 110 Minuten zudosiert, wobei der Reaktordruck von anfänglich 1,2 bar (absolut) auf 5,1 bar (absolut) anstiegt. Nach einer Nachreaktionszeit von 120 Minuten unter Rühren bei 125 °C wurden leichtflüchtige Anteile für 30 Minuten bei 125 °C im Vakuum abdestilliert und das Reaktionsgemisch anschließend auf Raumtemperatur abgekühlt.

Die Eigenschaften der erhaltenen Polyesterpolyole sind in Tabelle 1 wiedergegeben.

**Tabelle 1**

| Beispiel Nummer | 3 (PESP-1) | 4 (PESP-2) |
|---|---|---|
| Polyestercarboxylat | PESC-1 | PESC-2 |
| Polyestercarboxylat [g] | 174,05 | 12845 |
| Katalysator | MDEA | MDEA |
| Menge Katalysator [ppm] | 1000 | 863 |
| Propylenoxid [g] | 25,95 | 1741 |
| Dosierzeit [min] | 195 | 110 |
| Nachreaktion [min] | 60 | 120 |
| Hydroxylzahl [mg KOH/g] | 65,8 | 63,5 |
| Säurezahl [mg KOH/g] | 0,04 | 0,05 |
| Viskosität [mPas, 25 °C] | 15790 | 19895 |
| OH-Gruppen 1°/2° [mol/mol] | 32/68 | 32/68 |

### 5. Herstellung von Polyurethan-Weichschaumstoffen

In für die Herstellung von Polyurethanschaumstoffen üblicher Verarbeitungsweise nach dem Einstufenverfahren wurden die in den Beispielen gemäß der Tabelle 2 aufgeführten Einsatzstoffe in den Versuchsansätzen PUR-1, PUR-2 und PUR-3 miteinander zur Reaktion gebracht. Ansätze PUR-1 und PUR-3 sind Vergleichsbeispiele. Tabelle 2 zeigt auch die Ergebnisse der Ansätze.

**Tabelle 2**

| | | | PUR-1 | PUR-2 | PUR-3 |
|---|---|---|---|---|---|
| Formulierung | Desmophen VP.PU 60WB01 (Vergleich) | [Gew.-Tle.] | 100 | | 100 |
| | PESP-1 (erfindungsgemäß) | [Gew.-Tle.] | | 100 | |
| | Wasser eingew. | [Gew.-Tle.] | 3,00 | 3,00 | 3,00 |
| | Wasser gesamt | [Gew.-Tle.] | 3,00 | 3,00 | 3,00 |
| | Silbyk 9100 | [Gew.-Tle.] | 1,00 | 1,00 | 1,00 |
| | RCA 117 | [Gew.-Tle.] | 0,25 | | |
| | Niax A30 | [Gew.-Tle.] | 0,25 | | |
| | Niax A1 | [Gew.-Tle.] | | 0,10 | 0,10 |
| | Dabco 33LV | [Gew.-Tle.] | | 0,20 | 0,20 |
| | Addocat SO | [Gew.-Tle.] | | 0,10 | 0,10 |
| | TDI gesamt | [Gew.-Tle.] | 38,31 | 39,16 | 38,31 |
| | Desmodur T80 | [Gew.-Tle.] | 19,15 | 39,16 | 38,31 |
| | Desmodur T65 | [Gew.-Tle.] | 19,15 | | |
| | Kennzahl | | 100 | 100 | 100 |
| | | | | | |
| Verarbeitung | Startzeit | [s] | 15 | 18 | 10 |
| | Steigzeit | [s] | 85 | 95 | 120 |
| | | | | | |
| Eigenschaften | Zellstruktur | | fein | fein | * |
| | Rohdichte (DIN EN ISO 3386-1-98) | [kg/m³] | 42 | 41 | * |
| | Zugfestigkeit (DIN EN ISO 1798) | [kPa] | 137 | 127 | * |
| | Bruchdehnung (DIN EN ISO 1798) | [%] | 190 | 210 | * |
| | Stauchhärte (DIN EN ISO 3386-1-98) | [kPa] | 6.1 | 5.4 | * |
| | Druckverformungsrest bei 90 % Kompression (DIN EN ISO 1856-2000) | [%] | 2.9 | 3.3 | * |

| | | | | | |
|---|---|---|---|---|---|
| *: Bei diesem Ansatz wurde ein Schrumpf des Polyurethanweichschaumstoffes beobachtet. Daher wurden die Eigenschaften nicht bestimmt. | | | | | |

Man erkennt, dass bei den nicht erfindungsgemäßen Schäumen, welche unter Verwendung des Polyols Desmophen VP.PU 60WB01 hergestellt wurden, mit einem 1:1 Gemisch aus 2,4-TDI : 2,6-TDI 80 : 20 (T80) und 2,4-TDI : 2,6-TDI 65 : 35 (T65) ein brauchbarer Polyurethanweichschaumstoff erhalten wird (PUR-1). Dieses ist bei Einsatz von reinem T80 nicht der Fall. Dagegen wird ein erfindungsgemäß hergestellter Polyurethanweichschaum PUR-2 auch bei der Verwendung von reinem T80 erhalten.

Hier zeigt sich der Vorteil des erfindungsgemäßen Verfahrens, wonach Polyurethanschäume erhalten werden können, auch wenn nur die Isocyanatqualität T80 verwendet wird anstelle der konventionell bislang erforderlichen zwei Qualitäten von T80 und T65. Es ergibt sich zunächst ein wirtschaftlicher Vorteil, da T80 im Allgemeinen preisgünstiger als T65 ist. Weiterhin bedeutet dieses auch, dass die Flexibilität von Ester-Weichschaumrezepturen insofern größer wird, als dass je nach Verfügbarkeit oder Preis der Isocyanate Alternativen bei der Wahl des Isocyanates eröffnet werden.

Aufgrund der speziellen Polyole im erfindungsgemäßen Verfahren ist es auch möglich, eine gewisse Menge an Zinnkatalysatoren als partiellen Ersatz für Aminkatalysatoren einzusetzen. Dieses wirkt sich günstig auf durch hohe Aminkatalysatormengen ausgelöste nachteilige Eigenschaften wie zum Beispiel Geruch oder Alterungverhalten aus.

## Patentansprüche

1. Verfahren zur Herstellung eines Polyurethan-Weishschaums, umfassend den Schritt der Reaktion von
A) Polyesterpolyolen mit sekundären Hydroxyl-Endgruppen, welche erhältlich sind aus der Reaktion eines Carboxyl-Endgruppen umfassenden Polyesters mit einem Epoxid der allgemeinen Formel (1): 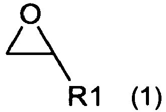 wobei R1 für einen Alkylrest oder einen Arylrest steht und wobei der Carboxyl-Endgruppen umfassende Polyester eine Säurezahl von ≥ 25 mg KOH/g bis ≤ 400 mg KOH/g und eine Hydroxylzahl von ≤ 5 mg KOH/g aufweist
mit
B1) Polyisocyanaten, welche ausgewählt sind aus der Gruppe umfassend Toluylendiisocyanat, Diphenylmethandiisocyanat, polymeres Diphenylmethandiisocyanat, Xylylendiisocyanat, Naphthylendiisocyanat, Hexamethylendiisocyanat, Diisocyanatodicyclohexylmethan und/oder Isophorondiisocyanat;
B2) Prepolymeren der in B1) genannten Polyisocyanate;
B3) Allophanaten, Harnstoffen, Biureten, Isocyanuraten, Uretdionen und/oder Carbodiimiden der in B1) genannten Polyisocyanate; und/oder
B4) Carbodiimid/Uretonimin-Derivaten der in B1) genannten Polyisocyanate.

2. Verfahren gemäß Anspruch 1, wobei in der Herstellung der Polyesterpolyole A) der Carboxyl-Endgruppen umfassende Polyester hergestellt wird, indem pro Mol Hydroxylgruppen eines Alkohols ≥ 1,03 Mol bis ≤ 1,90 Mol Carboxylgruppen oder Carboxylgruppenäquivalente einer Säurekomponente eingesetzt werden.

3. Verfahren gemäß Anspruch 1, wobei in der Herstellung der Polyesterpolyole A) der Carboxyl-Endgruppen umfassende Polyester unmittelbar vor der Reaktion mit dem Epoxid der allgemeinen Formel (1) hergestellt wird.

4. Verfahren gemäß Anspruch 1, wobei in der Herstellung der Polyesterpolyole A) der Carboxyl-Endgruppen umfassende Polyester erhältlich ist aus der Reaktion von
Ethylenglykol und Diethylenglykol sowie deren höhere Homologe, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und/oder 1,1,1-Trimethylolpropan
mit
Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und/oder Caprolacton.

5. Verfahren gemäß Anspruch 1, wobei in der Herstellung der Polyesterpolyole A) in dem Epoxid der allgemeinen Formel (1) R1 Methyl, Ethyl, n-Propyl, iso-Propyl, n-Butyl, sec-Butyl, iso-Butyl, tert-Butyl, Cyclohexyl oder Phenyl ist.

6. Verfahren gemäß Anspruch 1, wobei in der Herstellung der Polyesterpolyole A) die Reaktion mit dem Epoxid der allgemeinen Formel (1) bei einer Temperatur von ≥ 70 °C bis ≤ 150 °C stattfindet.

7. Verfahren gemäß Anspruch 1, wobei in den Polyesterpolyolen A) der molare Anteil von sekundären Hydroxylgruppen ≥ 50 mol-% bis ≤ 100 mol-% beträgt.

8. Verfahren gemäß Anspruch 1, wobei in der Herstellung der Polyesterpolyole A) die Reaktion des Carboxyl-Endgruppen umfassenden Polyesters mit dem Epoxid der allgemeinen Formel (1) in Gegenwart eines Katalysators durchgeführt wird, welcher pro Molekül mindestens ein Stickstoffatom umfasst.

9. Verfahren gemäß Anspruch 8, wobei der Katalysator ausgewählt ist aus der Gruppe umfassend:
- Amine der allgemeinen Formel (2): 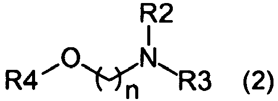 wobei gilt:
R2 und R3 sind unabhängig voneinander Wasserstoff, Alkyl oder Aryl; oder
R2 und R3 bilden gemeinsam mit dem sie tragenden N-Atom einen aliphatischen, ungesättigten oder aromatischen Heterozyklus;
n ist eine ganze Zahl von 1 bis 10;
R4 ist Wasserstoff, Alkyl oder Aryl; oder
R4 steht für -(CH₂)ₓ-N(R41)(R42), wobei gilt:
R41 und R42 sind unabhängig voneinander Wasserstoff, Alkyl oder Aryl; oder
R41 und R42 bilden gemeinsam mit dem sie tragenden N-Atom einen aliphatischen, ungesättigten oder aromatischen Heterozyklus;
x ist eine ganze Zahl von 1 bis 10;
- Amine der allgemeinen Formel (3): 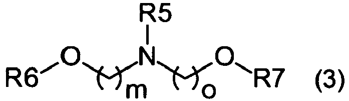 wobei gilt:
R5 ist Wasserstoff, Alkyl oder Aryl;
R6 und R7 sind unabhängig voneinander Wasserstoff, Alkyl oder Aryl;
m und o sind unabhängig voneinander eine ganze Zahl von 1 bis 10;
und/oder:
- Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

10. Verfahren gemäß Anspruch 9, wobei in dem Amin der allgemeinen Formel (2) R2 und R3 Methyl sind, R4 Wasserstoff ist und n = 2 ist oder aber R2 und R3 Methyl sind, R4 -(CH₂)₂-N(CH₃)₂ ist und n = 2 ist.

11. Verfahren gemäß Anspruch 9, wobei in dem Amin der allgemeinen Formel (3) R5 Methyl ist, R6 und R7 Wasserstoff sind, m = 2 ist und o = 2 ist.

12. Verfahren gemäß Anspruch 1, wobei in der Herstellung des Polyurethan-Polymers Zinn umfassende Katalysatoren eingesetzt werden, welche einen Anteil an der insgesamt in der Herstellung des Polyurethan-Polymers verwendeten Katalysatormenge von ≥ 5 Gewichts-% bis ≤ 99 Gewichts-% aufweisen.

13. Verfahren gemäß Anspruch 1, wobei das Polyisocyanat B) Toluylendiisocyanat mit einem Anteil des 2,4-Isomers von ≥ 75 Gewichts-% bis ≤ 100 Gewichts-% ist.

14. Polyurethan-Weichschaums, erhältlich durch ein Verfahren gemäß einem der Ansprüche 1 bis 13.

## Claims

1. Process for the production of a flexible polyurethane foam, comprising the step of reaction of
A) polyester polyols with secondary hydroxyl end groups, which are obtainable from the reaction of a polyester comprising carboxyl end groups with an epoxide of the general formula (1): 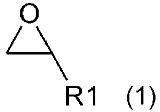 wherein R1 represents an alkyl radical or an aryl radical and wherein the polyester comprising carboxyl end groups has an acid number of from ≥ 25 mg of KOH/g to ≤ 400 mg of KOH/g and a hydroxyl number of ≤ 5 mg of KOH/g
with
B1) polyisocyanates which are chosen from the group comprising tolylene diisocyanate, diphenylmethane diisocyanate, polymeric diphenylmethane diisocyanate, xylylene diisocyanate, naphthylene diisocyanate, hexamethylene diisocyanate, diisocyanatodicyclohexylmethane and/or isophorone diisocyanate;
B2) prepolymers of the polyisocyanates mentioned in B1);
B3) allophanates, ureas, biurets, isocyanurates, uretdiones and/or carbodiimides of the polyisocyanates mentioned in B1); and/or
B4) carbodiimide/uretonimine derivatives of the polyisocyanates mentioned in B1).

2. Process according to claim 1, wherein in the preparation of the polyester polyols A) the polyester comprising carboxyl end groups is prepared by employing ≥ 1.03 mol to ≤ 1.90 mol of carboxyl groups or carboxyl group equivalents of an acid component per mol of hydroxyl groups of an alcohol.

3. Process according to claim 1, wherein in the preparation of the polyester polyols A) the polyester comprising carboxyl end groups is prepared directly before the reaction with the epoxide of the general formula (1).

4. Process according to claim 1, wherein in the preparation of the polyester polyols A) the polyester comprising carboxyl end groups is obtainable from the reaction of
ethylene glycol and diethylene glycol and higher homologues thereof, 1,3-propanediol, 1,4-butanediol, 1,6-hexanediol, 1,8-octanediol, 1,10-decanediol, 1,12-dodecanediol, 2-methylpropane-1,3-diol, neopentyl glycol, 3-methylpentane-1,5-diol, glycerol, pentaerythritol and/or 1,1,1-trimethylolpropane
with
succinic acid, fumaric acid, maleic acid, maleic anhydride, glutaric acid, adipic acid, sebacic acid, 1,10-decanedicarboxylic acid, 1,12-dodecanedicarboxylic acid, phthalic acid, phthalic anhydride, isophthalic acid, terephthalic acid, pyromellitic acid, trimellitic acid and/or caprolactone.

5. Process according to claim 1, wherein in the preparation of the polyester polyols A) in the epoxide of the general formula (1) R1 is methyl, ethyl, n-propyl, iso-propyl, n-butyl, sec-butyl, iso-butyl, tert-butyl, cyclohexyl or phenyl.

6. Process according to claim 1, wherein in the preparation of the polyester polyols A) the reaction with the epoxide of the general formula (1) takes place at a temperature of from ≥ 70 °C to ≤ 150 °C.

7. Process according to claim 1, wherein the molar content of secondary hydroxyl groups in the polyester polyols A) is ≥ 50 mol% to ≤ 100 mol%.

8. Process according to claim 1, wherein in the preparation of the polyester polyols A) the reaction of the polyester comprising carboxyl end groups with the epoxide of the general formula (1) is carried out in the presence of a catalyst which comprises at least one nitrogen atom per molecule.

9. Process according to claim 8, wherein the catalyst is chosen from the group comprising:
- amines of the general formula (2): 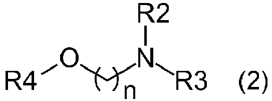 wherein:
R2 and R3 independently of each other are hydrogen, alkyl or aryl; or
R2 and R3 together with the N atom carrying them form an aliphatic, unsaturated or aromatic heterocycle;
n is an integer from 1 to 10;
R4 is hydrogen, alkyl or aryl; or
R4 represents -(CH₂)ₓ-N(R41)(R42), wherein:
R41 and R42 independently of each other are hydrogen, alkyl or aryl; or
R41 and R42 together with the N atom carrying them form an aliphatic, unsaturated or aromatic heterocycle;
x is an integer from 1 to 10;
- amines of the general formula (3): 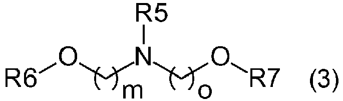 wherein:
R5 is hydrogen, alkyl or aryl;
R6 and R7 independently of each other are hydrogen, alkyl or aryl;
m and o independently of each other are an integer from 1 to 10;
and/or:
- diazabicyclo[2.2.2]octane, diazabicyclo[5.4.0]undec-7-ene, dialkylbenzylamine, dimethylpiperazine, 2,2'-dimorpholinyldiethyl ether and/or pyridine.

10. Process according to claim 9, wherein in the amine of the general formula (2) R2 and R3 are methyl, R4 is hydrogen and n = 2, or R2 and R3 are methyl, R4 is -(CH₂)₂-N(CH₃)₂ and n = 2.

11. Process according to claim 9, wherein in the amine of the general formula (3) R5 is methyl, R6 and R7 are hydrogen, m = 2 and o = 2.

12. Process according to claim 1, wherein in the preparation of the polyurethane polymer catalysts comprising tin which have a content of from ≥ 5 % by weight to ≤ 99 % by weight of the total amount of catalyst used in the preparation of the polyurethane polymer are employed.

13. Process according to claim 1, wherein the polyisocyanate B) is toluylene-diisocyanate with a content of the 2,4-isomer of from ≥ 75 % by weight to ≤ 100 % by weight.

14. Polyurethane flexible foam obtainable by a process according to one of claims 1 to 13.

## Revendications

1. Procédé de fabrication d'une mousse souple de polyuréthane comprenant l'étape de mise en réaction de
A) des polyesterpolyols contenant des groupes terminaux hydroxyle secondaires, qui peuvent être obtenus par la réaction d'un polyester comprenant des groupes terminaux carboxyle avec un époxyde de formule générale (1) : 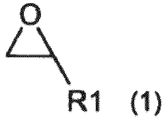 dans laquelle
R1 représente un radical alkyle ou un radical aryle, le polyester comprenant des groupes terminaux carboxyle présentant un indice d'acidité allant de ≥ 25 mg KOH/g à ≤ 400 mg KOH/g et un indice hydroxyle ≤ 5 mg KOH/g, avec
B1) des polyisocyanates, qui sont choisis dans le groupe comprenant le diisocyanate de toluylène, le diisocyanate de diphénylméthane, le diisocyanate de diphénylméthane polymère, le diisocyanate de xylylène, le diisocyanate de naphtylène, le diisocyanate d'hexaméthylène, le diisocyanatodicyclohexylméthane et/ou le diisocyanate d'isophorone ;
B2) des prépolymères des polyisocyanates cités en B1) ;
B3) des allophanates, des urées, des biurets, des isocyanurates, des uretdiones et/ou des carbodiimides des polyisocyanates cités en B1) ; et/ou
B4) des dérivés carbodiimide/urétonimine des polyisocyanates cités en B1).

2. Procédé selon la revendication 1, dans lequel, lors de la fabrication des polyesterpolyols A), le polyester comprenant des groupes terminaux carboxyle est fabriqué en utilisant par mole de groupes hydroxyle d'un alcool 1,03 mole à ≤ 1,90 mole de groupes carboxyle ou d'équivalents de groupes carboxyle d'un composant acide.

3. Procédé selon la revendication 1, dans lequel, lors de la fabrication des polyesterpolyols A), le polyester comprenant des groupes terminaux carboxyle est fabriqué directement avant la réaction avec l'époxyde de formule générale (1).

4. Procédé selon la revendication 1, dans lequel, lors de la fabrication des polyesterpolyols A), le polyester comprenant des groupes terminaux carboxyle peut être obtenu par la mise en réaction d'éthylène glycol et de diéthylène glycol, ainsi que leurs homologues supérieurs, de 1,3-propanediol, de 1,4-butanediol, de 1,6-hexanediol, de 1,8-octanediol, de 1,10-décanediol, de 1,12-dodécanediol, de 2-méthylpropanediol-1,3, de néopentylglycol, de 3-méthylpentanediol-1,5, de glycérine, de pentaérythrite et/ou de 1,1,1-triméthylolpropane,
avec
de l'acide succinique, de l'acide fumarique, de l'acide maléique, de l'anhydride de l'acide maléique, de l'acide glutarique, de l'acide adipique, de l'acide sébacique, de l'acide 1,10-décanedicarboxylique, de l'acide 1,12-dodécanedicarboxylique, de l'acide phtalique, de l'anhydride de l'acide phtalique, de l'acide isophtalique, de l'acide téréphtalique, de l'acide pyroméllitique, de l'acide triméllitique et/ou de la caprolactone.

5. Procédé selon la revendication 1, dans lequel, lors de la fabrication des polyesterpolyols A), dans l'époxyde de formule générale (1), R1 représente méthyle, éthyle, n-propyle, isopropyle, n-butyle, sec-butyle, isobutyle, tert-butyle, cyclohexyle ou phényle.

6. Procédé selon la revendication 1, dans lequel, lors de la fabrication des polyesterpolyols A), la réaction avec l'époxyde de formule générale (1) a lieu à une température de ≥ 70 °C à ≤ 150 °C.

7. Procédé selon la revendication 1, dans lequel, dans les polyesterpolyols A), la proportion molaire de groupes hydroxyle secondaires est de ≥ 50 % en moles à ≤ 100 % en moles.

8. Procédé selon la revendication 1, dans lequel, lors de la fabrication des polyesterpolyols A), la réaction du polyester comprenant des groupes terminaux carboxyle avec l'époxyde de formule générale (1) est réalisée en présence d'un catalyseur qui comprend au moins un atome d'azote par molécule.

9. Procédé selon la revendication 8, dans lequel le catalyseur est choisi dans le groupe comprenant :
- les amines de formule générale (2) : 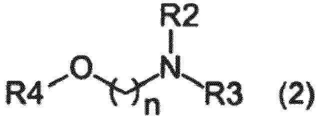 dans laquelle :
R2 et R3 représentent indépendamment l'un de l'autre hydrogène, alkyle ou aryle ; ou
R2 et R3 forment ensemble avec l'atome N qui les porte un hétérocycle aliphatique, insaturé ou aromatique ;
n est un nombre entier de 1 à 10 ;
R4 représente hydrogène, alkyle ou aryle ; ou
R4 représente -(CH₂)ₓ-N(R41)(R42),
R41 et R42 représentant indépendamment l'un de l'autre hydrogène, alkyle ou aryle ; ou
R41 et R42 formant ensemble avec l'atome N qui les porte un hétérocycle aliphatique, insaturé ou aromatique ;
x étant un nombre entier de 1 à 10 ;
- les amines de formule générale (3) : 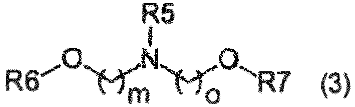 dans laquelle :
R5 représente hydrogène, alkyle ou aryle ;
R6 et R7 représentent indépendamment l'un de l'autre hydrogène, alkyle ou aryle ;
m et o représentent indépendamment l'un de l'autre un nombre entier de 1 à 10 ;
et/ou :
- le diazabicyclo[2.2.2]octane, le diazabicyclo[5.4.0]undéc-7-ène, la dialkylbenzylamine, la diméthylpipérazine, l'éther 2,2'-dimorpholinyldiéthylique et/ou la pyridine.

10. Procédé selon la revendication 9, dans lequel, dans l'amine de formule générale (2), R2 et R3 représentent méthyle, R4 représente hydrogène et n = 2, ou R2 et R3 représentent méthyle, R4 représente -(CH₂)₂-N(CH₃)₂ et n = 2.

11. Procédé selon la revendication 9, dans lequel, dans l'amine de formule générale (3), R5 représente méthyle, R6 et R7 représentent hydrogène, m = 2 et o = 2.

12. Procédé selon la revendication 1, dans lequel, lors de la fabrication du polymère de polyuréthane, des catalyseurs comprenant de l'étain sont utilisés, qui représentent une proportion de la quantité de catalyseur utilisée au total lors la fabrication du polymère de polyuréthane de ≥ 5 % en poids à ≤ 99 % en poids.

13. Procédé selon la revendication 1, dans lequel le polyisocyanate B) est le diisocyanate de toluylène ayant une proportion de l'isomère 2,4 de ≥ 75 % en poids à ≤ 100 % en poids.

14. Mousse souple de polyuréthane, pouvant être obtenue par un procédé selon l'une quelconque des revendications 1 à 13.
